# EUROPÄISCHE PATENTSCHRIFT

(11) **EP 2 715 115 B1**
(45) Veröffentlichungstag und Bekanntmachung des Hinweises auf die Patenterteilung: **15.11.2017**
(21) Anmeldenummer: 12729384.3
(22) Anmeldetag: 29.05.2012
(51) Int. Cl.: F03D 80/00, B66C 23/20, F03D 1/00

(54) **VERFAHREN ZUM ERRICHTEN EINER WINDKRAFTANLAGE**
METHOD FOR CONSTRUCTING A WIND TURBINE
DISPOSITIF DESTINÉ À ÉRIGER UNE ÉOLIENNE

(30) Priorität: 27.05.2011 DE 102011076648
(43) Veröffentlichungstag der Anmeldung: 09.04.2014
(73) Patentinhaber: Max Bögl Wind AG, 92369 Sengenthal (DE)
(72) Erfinder: BÖGL, Stefan, 92369 Sengenthal (DE)
(74) Vertreter: Bergmeier, Werner
(86) Internationale Anmeldenummer: PCT/EP2012/060023
(87) Internationale Veröffentlichungsnummer: WO 2012/163906

(56) Entgegenhaltungen:
- WO-A2-2009/056969
- DE-A1-102009 023 538
- DE-B- 1 198 981
- DE-U1- 20 018 890
- FR-A1- 2 943 743
- JP-A- H10 205 429
- JP-A- 2009 113 922
- NL-C2- 1 008 402
- NL-C2- 1 032 591
- US-A1- 2005 129 504

## Beschreibung

Die vorliegende Erfindung betrifft ein Verfahren zum Errichten einer Windkraftanlage mit einem Fundament, mit Funktionseinheiten sowie einem Turmbauwerk aus wenigstens zwei Abschnitten. Zumindest ein erster Abschnitt des Turmbauwerks besteht aus Fertigteilen, vorzugsweise aus ringförmigen oder ringsegmentförmigen Betonfertigteilen und wird auf dem Fundament erstellt. Auf dem oberen Ende des ersten Abschnitts wird ein Kopflagerelement angeordnet und die Fertigteile des ersten Abschnitts werden miteinander, mit dem Kopflagerelement und mit einem Fußlagerelement des Fundaments verbunden.

Zur Konstruktion und Errichtung von Windkraftanlagen sind im Stand der Technik verschiedene Verfahren bekannt geworden. In der Regel müssen bei Windkraftanlagen, welche aus Fertigteilen zusammengesetzt werden, mehrere, schwere Mobilkrane eingesetzt werden. Hierbei besteht stets die Schwierigkeit, die schweren Krane an die häufig abgelegenen Montageorte der Windkraftanlagen zu verbringen, da in diesen Bereichen häufig die Infrastruktur nicht ausreichend ausgebaut ist. Weiterhin besteht das Problem, dass die Straßen durch das Befahren mit derart schweren Mobilkranen beschädigt werden können. Auch sind derartige Mobilkrane vergleichsweise kostspielig, so dass deren Einsatz die Kosten für das Aufstellen der Windkraftanlagen erheblich verteuert. Eine weitere Problematik besteht darin, dass heute errichtete Windkraftanlagen große Nabenhöhen von 100 m bis 150 m oder höher erreichen, so dass die gängigen Mobilkrane hier an ihre Grenzen stoßen.

Die DE 94 14 643 U1 beschreibt den Einsatz schwerer Autokrane ebenfalls als nachteilig und schlägt daher eine Montagevorrichtung zum Errichten eines Windkraftturms aus vorgefertigten Teilen vor, die direkt am zu errichtenden Bauwerk befestigt ist. Die Montagevorrichtung ist ein vergleichsweise leichter Kletterkran, der einen versetzbaren Schlitten beinhaltet. Zur Befestigung des Kletterkrans sind an den einzelnen Bauwerksabschnitten Befestigungselemente bereits vorangebracht. Der Kletterkran kann hierdurch mittels seines eigenen Hubwerks auf die Höhe des jeweils nächsten bereits montierten Elements gefahren werden und dort wiederum befestigt werden. Die beschriebene Vorrichtung ist durch die einseitige Belastung und die geringe Tragfähigkeit des Krans nur für vergleichsweise niedrige Stahltürme einsetzbar.

Die DE 10 2009 023 538 A1 beschreibt ebenfalls die Montage eines Windkraftturmes mittels einer am Windkraftturm angebrachten Hebevorrichtung. Die Hebevorrichtung und die Verbindung mit dem Windkraftturm werden nicht näher beschrieben.
In ähnlicher Weise beschreibt die DE 102 12 305 A1 eine am Turm fortschreitend bewegbare bzw. befestigbare Montageeinrichtung in Form eines Schreitwerkerektors. Die Vorrichtung soll mit mehreren vorgefertigten Elementen des Turms verbunden sein, um diese miteinander zu verspannen und somit die Stabilität während der Montage zu gewährleisten. Durch die spezielle Anordnung des Schreitwerkerektors soll der Turm selbst als Zentralballast dienen. Um eine Biegebelastung des Turms zu verhindern, ist eine Abspannung des Hubseils vorgesehen. Bei Windkraftanlagen mit großen Nabenhöhen sind diesem System jedoch ebenfalls Grenzen gesetzt.

Die EP 1 474 579 A1 beschreibt einen Hybridturm mit einem ersten Abschnitt aus vorgefertigten Betonelementen, welche miteinander verspannt sind, und einem zweiten Abschnitt aus einem vorgefertigten Stahlmast. Mit derartigen Hybridtürmen ist es möglich, auch große Nabenhöhen zu erreichen. Die großen Nabenhöhen bedingen jedoch auch entsprechend große und schwere Betonelemente und Funktionseinheiten, so dass bei derartigen Türmen besondere Herausforderungen beim Transport der vorgefertigten Elemente an den Montageort sowie beim Errichten der Windkraftanlagen bestehen. Zum Aufbauen eines derartigen Turms beschreibt auch die EP 1 474 579 B1 einen Kletterkran, welcher jeweils auf dem bereits hergestellten Teil des Turms aufgeständert wird und sich an diesem abstützt. Dieser Kran soll selbst mit der fortschreitenden Höhe des Turms mitklettern.

Die DE 10 2008 055 607 A1 hält hingegen den Einsatz derartiger Kletterkrane zur Montage von mehreren Tonnen schweren und mehrere Meter hohen Segmenten für technisch nicht möglich. Entsprechend beschreibt auch diese Schrift die Montage des Turms mittels entsprechend leistungsfähigen Fahrzeugkranen. Neben den bereits beschriebenen Nachteilen wie begrenzte Montagehöhen und aufwändiger Transport zum Montageort besteht beim Einsatz von Mobilkranen zudem das Problem, dass ausreichend große und ebene Abstützflächen für die Aufstellung des Krans geschaffen werden müssen.

Nach der NL 1008402 ist es vorgesehen, eine Windkraftanlage mit Hilfe eines Gittermastkrans zu erreichten, der auf dem Fundament der Windkraftanlage aufgestellt ist. Der Gittermastkran ist als Kletterkran ausgeführt und kann mit dem Baufortschritt der Windkraftanlage um weitere Elemente aufgeklettert werden. Der Kran kann dabei auch mit dem Turm der Windkraftanlage verbunden werden. Nähere Angaben dazu werden jedoch nicht gemacht.

Aufgabe der vorliegenden Erfindung ist es, ein Verfahren zum Errichten einer Windkraftanlage vorzuschlagen, welches auch für Windkraftanlagen mit großen Nabenhöhen geeignet ist und nur geringe Anforderungen an den Platzbedarf stellt. Weiterhin soll eine entsprechende Windkraftanlage vorgeschlagen werden. Die Aufgabe wird gelöst mit den Merkmalen der unabhängigen Ansprüche.

Bei einem Verfahren zum Errichten einer Windkraftanlage mit einem Fundament, mit Funktionseinheiten und mit einem Turmbauwerk aus wenigstens zwei Abschnitten wird zumindest ein erster Abschnitt des Turmbauwerks aus ringförmigen oder ringsegmentförmigen Betonfertigteilen auf dem Fundament erstellt. Auf dem oberen Ende des ersten Abschnitts wird ein Kopflagerelement angeordnet und die Fertigteile des ersten Abschnitts werden mit dem Kopflagerelement, einem Fußlagerelement des Fundaments und miteinander verbunden. Erfindungsgemäß wird nach dem Verbinden des ersten Abschnitts ein Turmdrehkran an dem Kopflagerelement horizontal verankert und anschließend ein zweiter Abschnitt des Turmbauwerks mit Hilfe des Turmdrehkrans montiert.

Bei einer Windkraftanlage mit Funktionseinheiten, einem Turmbauwerk aus wenigstens zwei Abschnitten sowie einem Fundament besteht zumindest ein erster Abschnitt des Turmbauwerks aus ringförmigen oder ringsegmentförmigen Betonfertigteilen. Zwischen einem auf dem oberen Ende des ersten Abschnitts angeordneten Kopflagerelement und einem Fußlagerelement des Fundaments sind die Fertigteile des ersten Abschnitts miteinander verbunden, indem sie mittels Spanngliedern vorgespannt sind. Weiterhin sind die Fertigteile mit dem Kopflagerelement und dem Fußlagerelement verbunden. Das Kopflagerelement weist erfindungsgemäß eine Abspannvorrichtung zur horizontalen Verankerung eines Turmdrehkrans auf. Die Abspannvorrichtung kann auch als Abspann- und Abstützvorrichtung ausgebildet sein.

Das Kopflagerelement, insbesondere das Übergangsstück, weist dabei einen zumindest zweischaligen Aufbau mit einem inneren Betonelement und einem äußeren Stahlmantel auf. Die Verbindung zu einem unteren Abschnitt aus Beton und einem oberen Abschnitt aus Stahl ist hierdurch erleichtert. Weiterhin ist es in günstiger Weise möglich, die Abspannvorrichtung oder Teile davon an dem Stahlmantel zu befestigen, beispielsweise anzuschweißen.

Durch die horizontale Verankerung des Turmdrehkrans an dem Kopflagerelement können in günstiger Weise sehr hohe Hakenhöhen bei geringstem Platzbedarf für die Aufstellung des Kranes realisiert werden. Durch die erfindungsgemäße Verwendung von Turmdrehkranen sowie die Verankerung an dem Kopflagerelement können die bei hohen Nabenhöhen sehr schweren vorgefertigten Bauteile sowie die Funktionseinheiten der Anlage, welche über 50 Tonnen wiegen, problemlos auf Montagehöhe gehoben und montiert werden. Besonders vorteilhaft bei der Verwendung eines Turmdrehkrans ist es dabei, dass dieser durch die Abspannung auch bei höheren Windgeschwindigkeiten von 15 m/s - 20 m/s noch sicher betrieben werden kann. Durch die Verankerung des Turmdrehkrans an dem Kopflagerelement wird hierbei erreicht, dass die Abspannkräfte aus der Verankerung des Turmdrehkrans in günstiger Weise in das bereits aufgebaute Turmbauwerk eingeleitet werden können. Die Stabilität des bereits errichteten Teils des Turmbauwerks ist durch die Einleitung der Abspannkräfte nicht beeinträchtigt, da die Verankerung des Turmdrehkranes erst dann erfolgt, wenn der erste Abschnitt durch die Verbindung seiner Fertigteile bereits eine erhöhte Stabilität auch gegenüber Horizontalkräften aufweist. Das Kopflagerelement ist im Vergleich zu den Fertigteilen des ersten Abschnitt verstärkt ausgeführt und daher besonders gut zur Aufnahme der durch die horizontale Abspannung des Turmdrehkrans entstehenden Kräfte geeignet.

Bei einem Turmbauwerk mit einem ersten Abschnitt aus ringförmigen oder ringsegmentförmigen Betonfertigteilen erfolgt die Verbindung der Fertigteile, indem der erste Abschnitt mittels Spanngliedern vorgespannt wird. Der erste Abschnitt kann hierbei auch nur teilweise vorgespannt werden und seine endgültige Vorspannung erst nach Fertigstellung eines weiteren Abschnitts oder des gesamten Turmbauwerks erhalten. Die Vorspannkräfte aus der Vorspannung des Betonturms bzw. eines ersten Abschnitts des Betonturms sowie die Kräfte aus der Abspannung des Turmdrehkrans werden in günstiger Weise in das verstärkte ausgeführte Kopflagerelement eingeleitet.

Besonders vorteilhaft ist es hierbei, wenn der Turmdrehkran an einem Übergangsstück zur Verbindung eines ersten Abschnitts aus Beton und eines zweiten Abschnitts aus Stahl verankert wird. Hierdurch ist es möglich, in besonders günstiger Weise einen Hybridturm zu errichten, mit welchem sehr große Nabenhöhen erzielt werden können. Das Übergangsstück kann in bevorzugter Ausführung ein Verbundelement aus einem Betonmaterial und einem Stahlmaterial sein, so dass dieses für die Einleitung der Vorspannkräfte des entsprechenden Turmabschnitts als auch für die Einleitung der Abspannkräfte des Turmdrehkrans gut geeignet ist.

Bei sehr hohen Türmen ist es jedoch ebenfalls vorteilhaft, wenn das Kopflagerelement ein Zwischenspannstück zur Verbindung eines ersten Abschnitts aus Beton und eines zweiten Abschnitts aus Beton ist. Auch dieses ist verstärkt ausgeführt, um Abspannkräfte aus der Vorspannung des Betonturms aufzunehmen und daher gut für die Abspannung des Turmdrehkrans geeignet. Ein derartiges Zwischenabspannstück wird eingesetzt, um bei einem sehr hohen und schlanken Turm zumindest einen Teil der Spannglieder bereits zu verankern und hierdurch eine hohe Steifigkeit des Turmbauwerks zu erzielen. Das Zwischenspannstück weist hierzu beispielsweise an seinem Innenumfang einzelne Konsolen auf, an welchen Spannglieder festlegbar sind, während ein anderer Teil der Spannglieder zwischen den Konsolen bis zum nächsten Zwischenabspannstück oder bis zum Kopflagerelement durchgeführt werden kann.

Vorteilhaft ist es, wenn die Abspannvorrichtung, insbesondere ein Lagerbock zur Aufnahme einer Abspannstange, zumindest teilweise lösbar an dem Kopflagerelement oder dem Übergangsstück angeordnet ist, insbesondere angeschraubt ist. Die Abspannvorrichtung kann hierdurch für den Aufbau weiterer Windkraftanlagen verwendet werden oder bei der gleichen Windkraftanlage in anderer Höhe eingesetzt werden. Weiterhin können hierdurch je nach Höhe der auftretenden Kräfte und der Gegebenheiten am Montageort verschiedene Abspannvorrichtungen eingesetzt werden.

Zur lösbaren Befestigung der Abspannvorrichtung ist es vorteilhaft, wenn in dem Kopflagerelement Befestigungsmittel, insbesondere Schraubenmuttern, angeordnet sind, insbesondere in dem Kopflagerelement fest eingegossen sind. Durch die Befestigungsmittel kann zugleich eine gute Einleitung der Abspannkräfte in das Kopflagerelement erreicht werden.

Nach einer vorteilhaften Ausführungsform sind an dem Außenumfang des Kopflagerelements Knaggen angeschweißt, zwischen welchen die Abspannvorrichtung in Umfangsrichtung formschlüssig angeordnet ist oder anordenbar ist und welche der Querkraftabstützung der Abspannvorrichtung, beispielsweise eines Lagerbocks, dienen. Ebenso kann jedoch zur Querkraftabstützung in dem Außenumfang des Kopflagerelements, insbesondere in dem Stahlmantel, eine Ausnehmung ausgebildet sein, in welcher die Abspannvorrichtung in Umfangsrichtung formschlüssig angeordnet ist oder anordenbar ist.

Nach einer besonders vorteilhaften Ausführung der Erfindung wird der Turmdrehkran bzw. das unterste Turmstück des Turmdrehkrans mit Fundamentankern direkt in dem Fundament der Windkraftanlage verankert. Aufwändige Ballastierungen, welche einen großen Platzbedarf erfordern und an den Montageort verbracht werden müssen, sind hierbei nicht erforderlich, was insbesondere in abgelegenem und unebenem Gelände von großem Vorteil ist. Der Platzbedarf für den Turmdrehkran ist hierdurch weiter reduziert. Es ist jedoch auch möglich, den Turmdrehkran in einem separaten Fundament- oder Fundamentteil zu verankern.

Vorteilhaft ist es weiterhin, wenn das Fundament stufenförmig mit einer Basis und einer oberen Aufnahmefläche für das Turmbauwerk ausgebildet ist und ein Teil der Fundamentanker in der oberen Aufnahmefläche des Fundaments und ein weiterer Teil der Fundamentanker in der Basis des Fundaments angeordnet ist. Das unterste Turmstück des Turmdrehkrans ist in diesem Falle ebenfalls stufenförmig ausgebildet und hierdurch an die Abmessungen des Fundaments angepasst. Durch diese Ausführung ist es möglich, den Turmdrehkran sehr nahe an dem zu errichtenden Turmbauwerk aufzubauen, so dass nur eine geringe Ausladung des Turmdrehkrans erforderlich ist und auch sehr schwere Teile sicher mit dem Turmdrehkran gehoben und montiert werden können.

Bei einer vorteilhaften Ausführung der Erfindung sind in dem Fundament der Windkraftanlage Fundamentanker zur Befestigung des Turmdrehkrans angeordnet. Wird das Fundament der Windkraftanlagen in Ortbeton hergestellt, so können die Fundamentanker der Windkraftanlage direkt eingegossen werden, wobei in vorteilhafter Weise das unterste Turmstück bereits genau ausgerichtet werden kann. Grundsätzlich ist es jedoch denkbar, das Fundament ebenfalls ganz oder teilweise aus Fertigteilen herzustellen. Die Fundamentanker müssen hierbei mit einer großen Genauigkeit eingegossen werden.

Vorteilhaft ist es weiterhin, wenn das Turmbauwerk als Hybridturm mit wenigstens einem Abschnitt aus Betonfertigteilen und wenigstens einem Abschnitt aus Stahl hergestellt ist. Der zweite Abschnitt des Turmbauwerks wird vor Ort mittels des Turmdrehkrans aus einem oder auch mehreren ringförmigen, vorgefertigten Stahlsegmenten auf dem ersten Abschnitt aus Betonfertigteilen hergestellt.

Nach einer vorteilhaften Weiterbildung der Erfindung wird nach dem Errichten und Vorspannen des ersten Abschnitts ein zweiter Abschnitt des Turmbauwerks mittels des Turmdrehkrans Fertigteilen, vorzugsweise aus ringförmigen oder ringsegmentförmigen Betonfertigteilen montiert. Anschließend wird ein weiteres Kopflagerelement auf dem oberen Ende des zweiten Abschnitts angeordnet und die Fertigteile des zweiten Abschnitts analog zu dem ersten Abschnitt miteinander verbunden, vorzugsweise mittels Spanngliedern verspannt. Die Spannglieder zur Verspannung des zweiten Abschnitts können hierbei zwischen dem zweiten Kopflagerelement und dem ersten Kopflagerelement verlaufen oder aber auch zwischen dem zweiten Kopflagerelement und dem Fußlagerelement und somit eine weitere Vorspannung im gesamten bisher errichteten Turm aufbringen. Zur Montage eines weiteren Abschnitts wird danach der Turmdrehkran an dem zweiten Kopflagerelement horizontal verankert und ein weiterer Abschnitt des Turmbauwerks mittels des Turmdrehkrans montiert. Je nach Höhe des zu errichtenden Turmbauwerks kann das erste Abspannelement hierbei gelöst werden oder aber es wird eine zweimalige Abspannung des Turmdrehkrans an dem Turmbauwerk vorgenommen. Der weitere Abschnitt kann bei einem Hybridturm ein Abschnitt aus Stahlsegmenten sein, so dass das weitere Kopflagerelement das den Betonturm abschließende Kopflagerelement bildet. Der weitere Abschnitt kann jedoch je nach Höhe des Turmbauwerks ebenfalls ein Abschnitt aus Betonfertigteilen sein.

Nach der Montage des Turmbauwerks werden die Funktionsgruppen der Windkraftanlage ebenfalls mittels des Turmdrehkrans montiert. Durch die Abspannung des Turmdrehkrans an dem Turm der Windkraftanlage und die Anordnung nahe dem zu errichtenden Turm ist es hierbei möglich, auch die schweren Teile der Windkraftanlage wie Gondel oder Rotorblätter mittels des Turmdrehkrans auch bei hohen Nabehöhen zu montieren. Vorzugsweise wird dabei die Drehbewegung der Gondel nach ihrer Montage blockiert, so dass keine Kollisionen mit dem Turmdrehkran zu befürchten sind.

Vorzugsweise werden die Rotorblätter der Windkraftanlage einzeln mittels des Turmdrehkrans montiert, wobei die Nabe jeweils mittels des Getriebes der Windkraftanlage in eine Montageposition gedreht wird, in welcher die Rotorblätter nacheinander montiert werden. Vorzugsweise wird die Nabe dabei in derselben Richtung um jeweils 120° weiter gedreht.

Zum Abklettern des Turmdrehkrans ist es vorteilhaft, wenn der Turmdrehkran und ein Rotorstern jeweils in eine Abkletterposition gedreht werden, in welcher ein Gegenausleger des Turmdrehkrans zwischen zwei Rotorblättern in die Rotationsebene des Rotorsterns ragt, und in dieser Abkletterposition ein Turmstück des Turmdrehkrans abgeklettert wird. Anschließend wird der Turmdrehkran in eine Drehposition gedreht, in welcher der Gegenausleger sich außerhalb der Rotationsebene des Rotorsterns befindet, so dass der Rotorstern in die nächste Abkletterposition gedreht werden kann. Die Nabe wird dabei ebenfalls bevorzugt jeweils in dieselbe Richtung weiter gedreht.

Nach einer vorteilhaften Ausführungsform der Erfindung kann nach der Montage eines obersten Abschnitts des Turmbauwerks aus Stahl oder Stahlsegmenten der Turmdrehkran mittels einer weiteren Abspannvorrichtung und/oder einem Dämpfungselement mit dem obersten Abschnitt verbunden werden. Hierdurch kann auch bei sehr großen Höhen des Turmbauwerks die Montage der Funktionseinheiten der Windkraftanlage sicher erfolgen. Wird der Turmdrehkran mit dem obersten Stahlabschnitt durch ein Dämpfungselement verbunden, so können Schwingungen des Turmbauwerks, welche durch die Einleitung der Abspannkräfte entstehen, vermieden oder zumindest stark vermindert werden.

Vorteilhaft ist es weiterhin, wenn das Turmbauwerk aus parabelförmigen, konischen und zylindrischen Betonfertigteilen aufgebaut ist, wobei der erste Abschnitt in einem Fußbereich aus parabelförmigen, in einem Mittelbereich aus konischen und in einem Kopfbereich aus zylindrischen Betonfertigteilen besteht. Weist das Turmbauwerk einen zweiten Abschnitt auf, so ist auf dem ersten Abschnitt ein Zwischenabspannstück angeordnet und der zweite Abschnitt besteht dann wiederum zur Durchmesserreduktion aus konischen Betonfertigteilen sowie zur Erreichung größerer Höhen gegebenenfalls aus zylindrischen Betonfertigteilen, wobei auf dem zweiten Abschnitt dann das Übergangsstück angeordnet ist. Vorzugsweise ist der zweite Abschnitt in einem Fußbereich aus zylindrischen und erst in einem Kopfbereich aus konischen Betonfertigteilen aufgebaut, was weiterhin zu einer hohen Eigenfrequenz des Turmbauwerks beiträgt. Der modulare Aufbau des Turmbauwerks aus verschieden geformten Betonfertigteilen ermöglicht es dabei in vorteilhafter Weise, verschieden hohe Türme aus den gleichen Modulen zu errichten und dabei durch eine unterschiedliche Anordnung der konischen und zylindrischen Betonfertigteile jeweils die Eigenfrequenzanforderungen sicherzustellen.

Vorteilhaft ist es weiterhin, wenn nach der Fertigstellung des Fundaments am Montageort der Turmdrehkran auf die Fundamentanker montiert wird und bereits der erste Abschnitt des Turmbauwerks zumindest teilweise mittels des Turmdrehkrans montiert wird. Je nach Größe und Gewicht der untersten Fertigteile ist es hierdurch möglich, den Einsatz von Mobil- oder Raupenkranen vollständig zu vermeiden oder zumindest zu minimieren.

Besonders vorteilhaft bei einem Verfahren zum Errichten einer Windkraftanlage ist es, wenn der Turmdrehkran zunächst mit einer ersten Hakenhöhe auf die Fundamentanker montiert wird, dann der erste Abschnitt des Turmbauwerks zumindest teilweise mittels des Turmdrehkrans erstellt und vorgespannt wird und anschließend der Turmdrehkran auf eine zweite Hakenhöhe aufgeklettert wird und an dem Kopflagerelement verankert wird. Hierdurch kann bei geringstem Platzbedarf der Turmdrehkran während der gesamten Montage der Windkraftanlage eingesetzt werden, ohne die Standsicherheit des Turms zu gefährden. Hierbei können problemlos Nabenhöhen von 150 m erreicht werden.

Besonders vorteilhaft ist es weiterhin, wenn die Fertigteile und/oder die ringförmigen Stahlsegmente und/oder die Funktionseinheiten der Windkraftanlage mittels Lkw bis in den Ausladungsbereich des Turmdrehkrans transportiert werden und direkt von dem Turmdrehkran aufgenommen werden. Weitere Hebezeuge oder teure Mobilkrane zum Abladen der Lkws sind hierdurch nicht erforderlich bzw. kann der Einsatz zusätzlicher Krane minimiert werden.

Weitere Vorteile der Erfindung werden anhand der folgenden Figuren beschrieben. Es zeigen:
- **Fig. 1 - Fig. 4**: das erfindungsgemäße Verfahren zum Errichten einer Windkraftanlage während der verschiedenen Verfahrensschritte in schematischen Schnittdarstellungen,
- **Fig. 5**: ein Fundament einer Windkraftanlage mit darin angeordneten Fundamentankern,
- **Fig. 6 und Fig. 7**: eine schematische Darstellung eines Zwischenabspannstücks in einer Draufsicht,
- **Fig. 8**: eine schematische Draufsicht eines Übergangsstücks mit daran angeordneten Abspannvorrichtungen,
- **Fig. 9**: eine alternative Ausführung der Anordnung von Abspannvorrichtungen,
- **Fig. 10**: das erfindungsgemäße Verfahren zum Errichten einer Windkraftanlage mit zweifacher Verankerung des Turmdrehkrans,
- **Fig. 11 - Fig. 13**: das Abklettern des Turmdrehkrans nach erfolgter Montage der Windkraftanlage, sowie
- **Fig. 14**: eine weitere Ausführung eines Zwischenabspannstücks.

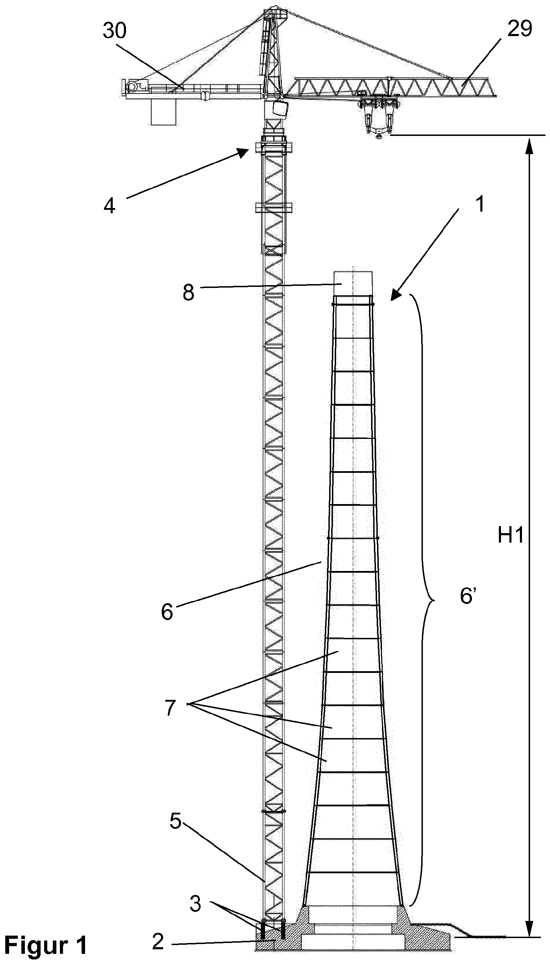

Wie in Fig. 1 dargestellt, wird zum Errichten einer Windkraftanlage 1 zunächst ein Fundament 2 vorzugsweise in Ortbeton hergestellt. Das Fundament 2 ist vorliegend als kreisförmiges Ringfundament ausgeführt, wobei Fundamentanker 3 zur späteren Verankerung eines Turmdrehkrans 4 direkt in das Fundament miteingegossen werden. Der Turmdrehkran 4 wird hierbei mit seinem untersten Turmstück 5 fest mit den Fundamentankern 3 verbunden. Durch die Fertigung des Fundaments 2 in Ortbeton können die Fundamentanker 3 mit dem Turmstück 4 in günstiger Weise vor Ort exakt senkrecht ausgerichtet werden. Das spätere Aufstellen des Turmdrehkrans ist hierdurch problemlos und sicher möglich. Durch die direkte Integration der Fundamentanker 3 in das Fundament 2 der Windkraftanlage entstehen keine zusätzlichen Kosten für Fundamentierung und Ballastierung des Turmdrehkrans 4, so dass der Einsatz des Turmdrehkrans auch vergleichsweise kostengünstig ausgeführt werden kann.

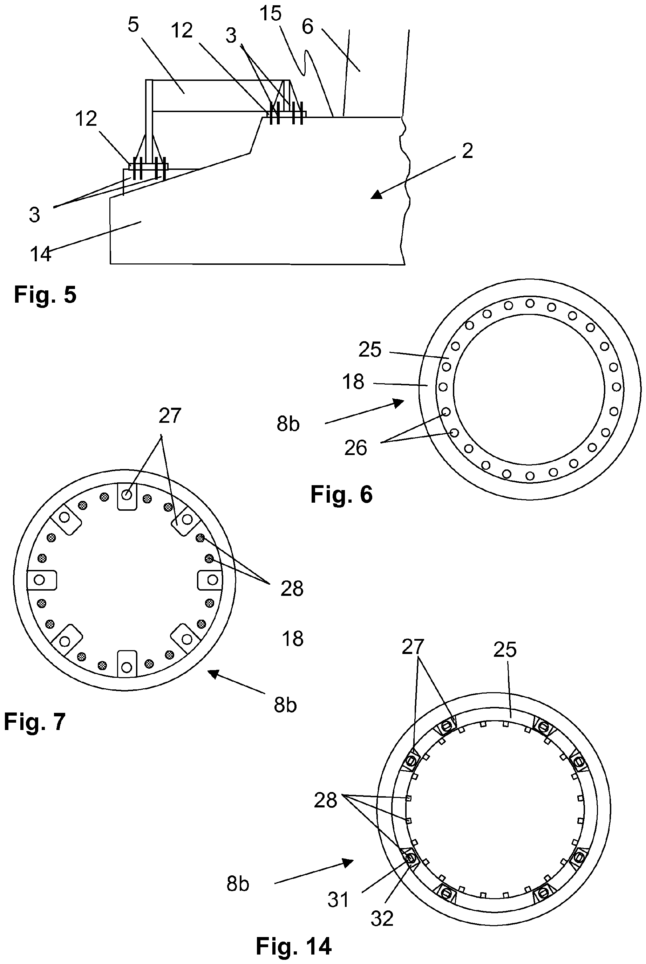

Eine vorteilhafte Ausführung eines Fundaments 2 sowie einer Anordnung des untersten Turmstücks 5 eines Turmdrehkrans 4 ist in Figur 5 gezeigt. Das Fundament 2 ist dabei in an sich bekannter Weise als kreisförmiges Ringfundament stufenförmig ausgeführt und weist eine Basis 14 auf, welche sich im Wesentlichen unterhalb des Umgebungsniveaus befindet sowie eine obere Aufnahmefläche 15, auf welcher das Turmbauwerk 6 errichtet wird. Ein erster Teil der Fundamentanker 3 ist dabei direkt in der oberen Aufnahmefläche 15 eingegossen, während der andere Teil der Fundamentanker 3 in der Basis 14 eingegossen ist. Um eine senkrechte Aufstandsfläche für den Turmdrehkran 4 bereitzustellen, kann wie vorliegend gezeigt ein Sockel 16 an der Basis 14 angegossen sein. Das unterste Turmstück 5 des Turmdrehkrans 4 ist dabei entsprechend der stufenförmigen Ausbildung des Fundaments 2 ebenfalls stufenförmig ausgebildet und wird über entsprechende Fußflansche 17 an den eingegossenen Fundamentankern 3 befestigt. Durch diese stufenförmige Ausbildung des untersten Turmstücks 5 und das Vorsehen der Fundamentanker 3 direkt in der oberen Aufnahmefläche 15 ist es möglich, einen Turmdrehkran 4 sehr nahe an dem zu errichtenden Turmbauwerk 6 aufzustellen. Hierdurch können auch sehr schwere Lasten sicher auf eine große Höhe gehoben werden, da der Turmdrehkran 4 nur mit einer geringen Ausladung betrieben werden muss.

Nach Fertigstellung des Fundaments 2 wird ein erster Abschnitt 6' aus Betonfertigteilen 7, welche vorliegend ebenfalls kreisringförmig sind, aufgebaut. Bei den heute ausgeführten Nabenhöhen von 100 - 150 m können die untersten Betonringe bzw. Betonfertigteile 7 der Windkraftanlage beispielsweise einen Durchmesser von 12 m und Gewichte von bis zu 100 Tonnen erreichen. Je nach Größe und Gewicht der untersten Betonringe bzw. ringförmigen Betonfertigteile 7 ist es daher vorteilhaft, diese aus zwei oder mehreren ringsegmentförmigen Betonfertigteilen 7 zusammenzusetzen, um eine Fertigung im Fertigteilwerk sowie einen Straßentransport zu ermöglichen. Aufgrund der Größe und des Gewichts der untersten Betonfertigteile 7 kann daher je nach Tragkraft des verwendeten Turmdrehkrans ein zusätzlicher Mobil- oder Raupenkran erforderlich sein, mittels welchem die untersten Betonfertigteile 7 entladen und auf das Fundament 2 aufgesetzt werden. Sind die untersten Betonringe aus mehreren ringsegmentförmigen Betonfertigteilen 7 zusammengesetzt, kann der Zusammenbau der untersten, schweren Betonringe ebenfalls mittels eines zusätzlichen Mobil- oder Raupenkrans erfolgen.

Nachdem die untersten Ringe des ersten Abschnitts 6' auf das Fundament 2 montiert sind, wird schließlich der Turmdrehkran 4 auf die Fundamentanker 3 montiert. Der Turmdrehkran 4 wird hierzu zunächst mit einer ersten Hakenhöhe H1 freistehend aufgebaut. Der erste Abschnitt wird mit dieser Aufstellung des Turmdrehkrans 4 fertig gestellt, indem die weiteren Betonringe bzw. ringförmigen Betonfertigteile 7 mittels des Turmdrehkrans 4 aufeinandergesetzt werden. Je nach Platzverhältnissen am Montageort und dem Einsatz zusätzlicher Krane kann der Turmdrehkran 4 natürlich auch bereits unmittelbar nach Fertigstellung des Fundaments 2 auf die Fundamentanker 3 montiert werden. Bei weniger hohen Türmen und weniger schweren Ringsegmenten ist es auch möglich, bereits den ersten Abschnitt 6' des Turms 6 der Windkraftanlage 1 vollständig nur mit Hilfe des Turmdrehkrans 4 zu errichten. Die Betonfertigteile 7 können hierbei direkt bis in den Ausladungsbereich des Turmdrehkrans 4 transportiert direkt durch den Turmdrehkran übernommen werden.

Schließlich wird mittels des Turmdrehkrans 4 ein Kopflagerelement 8 auf den ersten Abschnitt 6' des Turms 6 aus Betonfertigteilringen 7 aufgesetzt. Das Kopflagerelement 8 ist vorliegend ein Übergangsstück, welches ein Verbundbauteil aus einem Betonmaterial sowie einem Stahlmaterial ist. Mittels dieses Übergangsstücks ist es möglich, beim Aufbau eines Hybridturms den ersten Abschnitt 6' aus Betonfertigteilen 7 mit einem zweiten Abschnitt 6" aus Stahl zu verbinden. Zugleich kann das Übergangsstück als Kopflagerelement 8 zum Aufbringen einer Vorspannung auf den ersten Abschnitt 6' aus Betonfertigteilen 7 dienen. Das Übergangsstück bzw. das Kopflagerelement 8 ist daher zur Aufnahme der Spannkräfte verstärkt ausgeführt Nach dem Aufsetzen des Übergangsstücks kann schließlich der erste Abschnitt 6' mittels einem oder mehrerer Spannglieder (hier nicht dargestellt) zwischen einem Fußlagerelement des Fundaments 2 sowie dem Kopflagerelement 8 vorgespannt werden. Das Fußlagerelement kann hierbei auch als Decke des Fundamentkellers ausgeführt werden. Besonders vorteilhaft ist es hierbei, wenn die Spannglieder außerhalb der Wandung des Turms 6 im Inneren des Turms 6 verlaufen, da sie dann jederzeit zum Nachspannen zugänglich sind.

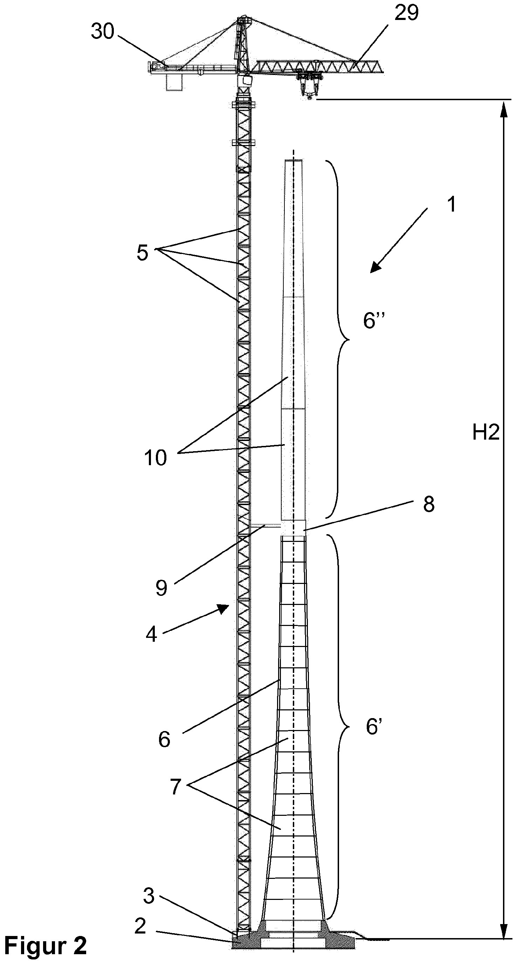

Wie aus Fig. 2 ersichtlich, wird nach der Fertigstellung des ersten Abschnitts 6' des Turms 6 der Turmdrehkran 4 durch Einsetzen weiterer Turmstücke 5 auf seine endgültige Hakenhöhe H2 aufgeklettert, welche die maximale freistehende Hakenhöhe überschreitet. Um die Standsicherheit des Krans 4 weiterhin zu gewährleisten, wird der Turmdrehkran 4 mittels einer Abspannvorrichtung 9 an dem Turm 6 der Windkraftanlagen 1 verankert. Die Abspannvorrichtung 9 ist hierzu lösbar und austauschbar am Übergangsstück bzw. Kopflagerelement 8 befestigt, so dass diese auch gelöst werden und an anderer Stelle des Turms 6 zum Einsatz kommen kann bzw. zum Aufbau weiterer Anlagen verwendet werden kann. Als Abspannvorrichtungen 9 sind beispielsweise flexible Spannmittel wie Seile oder auch starre Abspannelemente wie Spindelneinsetzbar, welche auch eine Abstützvorrichtung ausbilden.

Der Kran 4 kann dabei zunächst auf seine endgültige Hakenhöhe H2 aufgeklettert werden und erst anschließend an dem Übergangsstück 8a bzw. dem Kopflagerelement 8 verankert werden, oder der Kran 4 kann zunächst an dem Übergangsstück 8a verankert werden und erst allmählich jeweils mit dem Aufsetzen weiterer Betonfertigteile 7 auf das Turmbauwerk 6 aufgeklettert werden, bis er seine endgültige Hakenhöhe H2 erreicht. Um die Montagesicherheit des Turmdrehkrans 4 zu gewährleisten, wird die Hakenhöhe H2 so niedrig wie möglich gehalten und liegt nur etwas höher als die Höhe der Gondel 13.

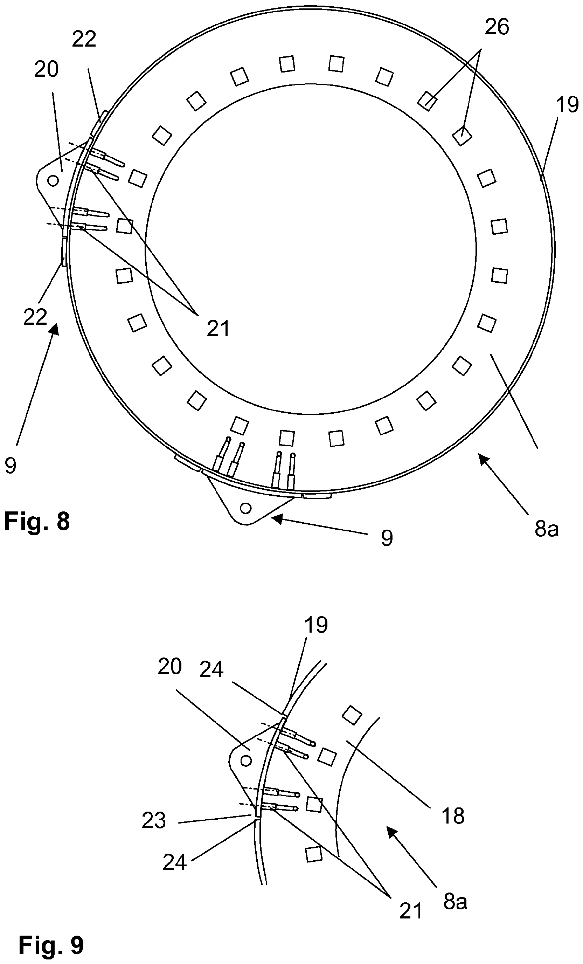

Figur 8 zeigt ein Kopflagerelement 8, welches vorliegend als Übergangsstück 8a zur Verbindung eines ersten Abschnitts 6' aus Beton und eines zweiten Abschnitts 6" aus Stahl ist. Das Übergangsstück 8a weist einen zumindest zweischaligen Aufbau mit einem inneren Betonelement 18 und einem äußeren Stahlmantel 19 auf. An der oberen Oberfläche des Übergangsstücks 8a (nicht gezeigt) geht der äußere Stahlmantel 19 in einen ringförmigen Flansch über, welcher das Betonelement 18 bedeckt und an welchem sowohl Spannglieder 28 (s. Fig. 7) festlegbar sind als auch die Stahlsegmente 10 befestigt werden können. Das Kopflagerelement 8 kann jedoch auch ein Zwischenabspannstück 8b sein und muss weiterhin auch nicht unbedingt einen Stahlmantel 19 aufweisen.

Die Abspannvorrichtung 9 beinhaltet vorliegend zwei entlang des Umfangs des Übergangsstücks 8a angeordnete Lagerböcke 20, an welchen jeweils eine Abspannstange (nicht dargestellt) befestigbar ist. Die Lagerböcke 20 sind dabei mittels ihrer Flanschflächen an dem Übergangsstück 8a verschraubt. In dem Betonelement 18 des Übergangsstücks 8a sind hierzu Schraubenmuttern 21 eingegossen, so dass die Lagerböcke 20 mittels Schrauben lösbar an dem Übergangsstück 8a befestigt werden können. Die Schraubenmuttern 21 sind beispielsweise als Muffenstäbe ausgebildet und sorgen hierdurch zugleich für eine gute Krafteinleitung der Abspannkräfte in das Betonelement 18. Zur Aufnahme von Schubkräften sind am Außenumfang des Kopflagerelements 8, vorliegend an dem Stahlmantel 19, je Abspannvorrichtung 9 bzw. je Lagerbock 20 zwei Knaggen 22 angeschweißt, zwischen welchen die Abspannvorrichtung 9 in Umfangsrichtung formschlüssig gehalten ist.

Die Querkraftabstützung der Lagerböcke 20 kann jedoch auch in anderer Weise erfolgen. Beispielsweise kann, wie in Figur 9 gezeigt, in dem Stahlmantel 19 des Kopflagerelements 8 eine Ausnehmung 23 vorgesehen sein, in welcher die Abspannvorrichtung 9, vorliegend der Lagerbock 20, direkt einsetzbar ist. Die Querkraftabstützung wird dabei durch die Seitenflächen 24 der Ausnehmung 23 in dem Stahlmantel 19 bewerkstelligt. Zur Herstellung eines Formschlusses bzw. zur Sicherstellung der Kraftübertragung in Umfangsrichtung können dabei ebenso wie bei der Ausführung der Fig. 8 gegebenenfalls noch Distanzstücke (nicht dargestellt) zwischen dem Lagerbock 20 und den Schubknaggen 22 bzw. den Seitenflächen 24 vorgesehen werden.

Im Anschluss daran wird ein zweiter Abschnitt 6" des Turms 6 mittels des Turmdrehkrans 4 aufgebaut, welcher vorliegend aus drei Stahlsegmenten 10 besteht. Ebenso kann der zweite Abschnitt 6" auch nur aus einem einzigen Stahlmast oder aus weniger als drei Stahlsegmenten bestehen, welcher auf das Übergangsstück bzw. das Kopflagerelement 8 aufgesetzt wird. Die Stahlsegmente 10 können ebenfalls bis an die Ausladung des Turmdrehkrans 5 herangefahren werden und direkt durch den Turmdrehkran 4 abgeladen und übernommen werden. Je nach Größe und Länge der verwendeten Stahlsegmente 10 kann zum Aufrichten der in der Regel liegend transportierten Stahlsegmente 10 jedoch auch die Hilfe eines Mobilkrans erforderlich sein. Dieser kann jedoch vergleichsweise klein sein, da er lediglich zum Aufrichten der Stahlsegmente 10 benötigt wird und somit nur eine geringere Tragkraft erforderlich ist. Nach Befestigung der Stahlsegmente 10 und Fertigstellung des zweiten Abschnitts 6" können mit dem Turmdrehkran 4 sämtliche Funktionsbaugruppen 11, 12, 13 der Windkraftanlage 1, wie Nabe 11, Rotorblätter 12 bzw. Rotorstern, Gondel 13 sowie der Triebstrang (nicht dargestellt) montiert werden.

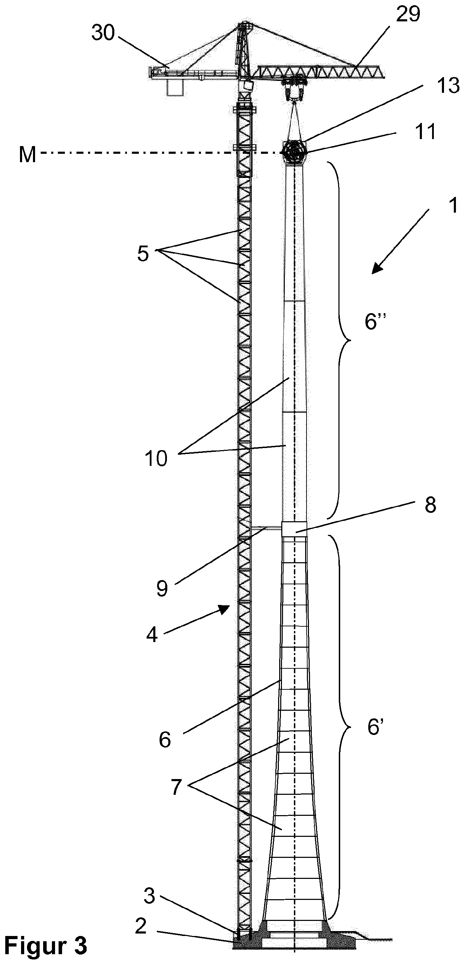

Die Montage der Funktionsbaugruppen 11, 12, 13 ist in Fig. 3 gezeigt. Hierbei werden Gondel, Triebstrang sowie die Rotorblätter separat voneinander an den Montageort ebenfalls bevorzugt bis in den Ausladungsbereich des Turmdrehkrans 4 transportiert, durch den Turmdrehkran 4 auf Nabenhöhe angehoben und auf Nabenhöhe montiert. Nach der Montage von Gondel 13 und Triebstrang wird die Nabe 11 durch den Turmdrehkran 4 angehoben und montiert. Die Drehbewegung der Gondel 13 wird dabei nach der Montage der Gondel 13 blockiert, da es durch den unmittelbar neben dem Turm 6 montiertem Turmdrehkran 4 bei einer frei beweglichen Gondel 13 zu Kollisionen mit dem Turmdrehkran 4 kommen könnte. Der Hauptausleger 29 und der Gegenausleger 30 des Turmdrehkrans 4 befinden sich dabei oberhalb der Gondel 13, so dass der Turmdrehkran 4 zur Montage der weiteren Funktionseinheiten 12 frei schwenken kann.

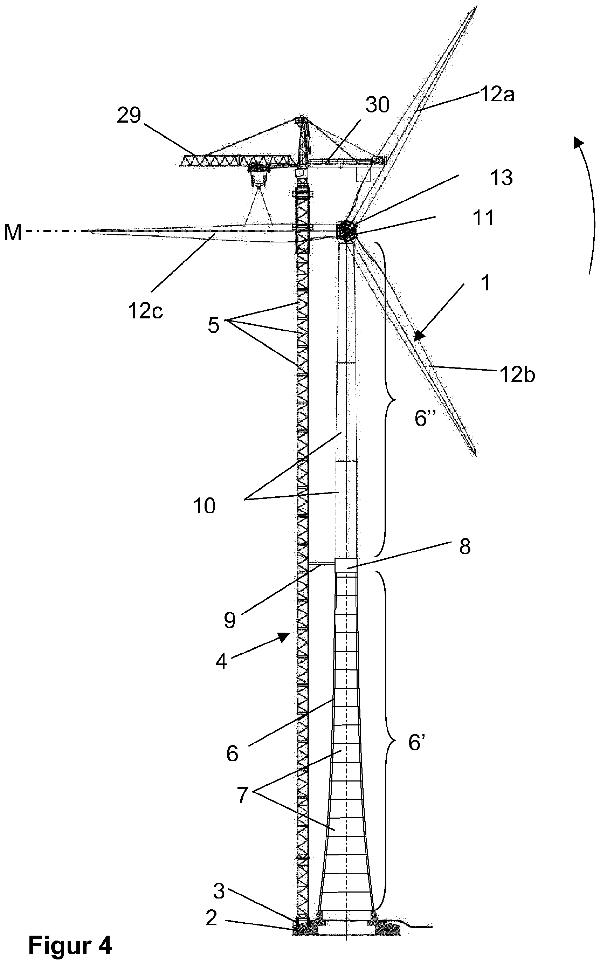

Anschließend können nacheinander die Rotorblätter 12 der Windkraftanlage 1 wie in Fig. 4 dargestellt montiert werden. Der Rotor der Windkraftanlage 1 wird hierzu jeweils in eine für den Turmdrehkran 4 günstige Montageposition zur Montage der Rotorblätter 12 gedreht und die Rotorblätter 12 werden einzeln montiert. Vorliegend ist die Montage des dritten Rotorblatts 12c gezeigt, welches sich in der mit einer Strichpunktlinie gekennzeichneten Montageposition M befindet. Die Montage der Rotorblätter 12a, b, c mittels des Turmdrehkrans 4 erfolgt dabei derart, dass zunächst die Nabe 11 mittels des Getriebes der Windkraftanlage 1 in eine Drehposition gedreht wird, in welcher sich die Aufnahme der Nabe 11 für das erste Rotorblatt 12a in der Montageposition M befindet. Das erste Rotorblatt 12a wird mittels einer Vorrichtung durch den Turmdrehkran bereits in seiner im Wesentlichen waagrechten Montageposition aufgenommen, angehoben und an die Aufnahme der Nabe 11 montiert. Anschließend wird die Nabe 11 mittels des Getriebes der Windkraftanlage um 120° weitergedreht, wie vorliegend durch den Pfeil symbolisiert, bis sich die zweite Aufnahme der Nabe 11 für das Rotorblatt 12b in der Montageposition M befindet. Anschließend wird das zweite Rotorblatt 12b angehoben und montiert. Wie nun in Figur 4 ersichtlich, besteht beim weiteren Drehen der Nabe 11 mit dem bereits montierten Rotorblättern 12a, 12b die Gefahr, dass der Gegenausleger 30 des Turmdrehkrans 4 beim Verschwenken mit den Rotorblättern 12a, 12b kollidiert.

Um ein Schwenken des Turmdrehkrans zu ermöglichen, kann gegebenenfalls die Nabe 11 mit den Rotorblättern 12a, 12b daher zunächst nur ein Stück und noch nicht um volle 120° in Pfeilrichtung weitergedreht werden. Werden die Rotorblätter 12 in ihrer späteren Einbaulage auf der Vormontagefläche zur Verfügung gestellt, so ist ein Durchschwenken des Turmdrehkrans 4 jedoch nicht mehr erforderlich. Nachdem das dritte Rotorblatt 12c auf die Höhe der Montageposition M angehoben ist, wird der Turmdrehkran 4 schließlich aus der Rotationsebene der Rotorblätter 12a, 12b gedreht, so dass diese nun um das letzte Stück bis 120° weiter gedreht werden können und sich schließlich die dritte Aufnahme der Nabe 11 für das Rotorblatt 12c in der Montageposition M befindet. In dieser Position, welche in Figur 4 dargestellt ist, wird schließlich das dritte Rotorblatt 12c montiert.

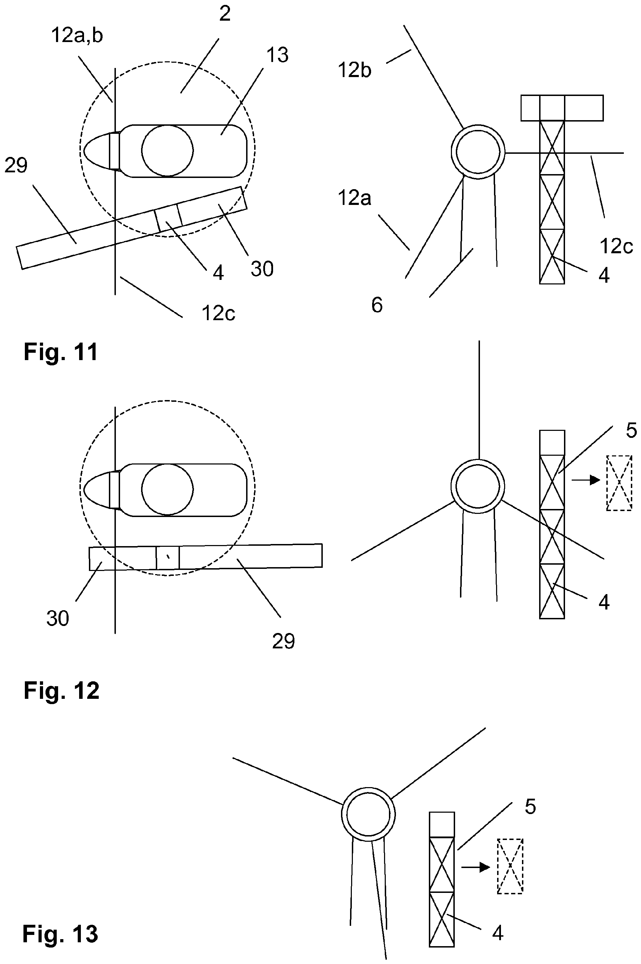

Nach der Montage der Rotorblätter 12 bzw. der Fertigstellung der Windkraftanlage 1 wird der Turmdrehkran 4 wieder abgeklettert, wobei der Rotorstern ebenfalls gezielt gedreht werden muss, um die Abwärtsbewegung des Auslegers nicht zu behindern. Das Abklettern des Turmdrehkrans 4 ist schematisch in den Figuren 11 bis 13 gezeigt. Figur 11 zeigt die bereits errichtete Windkraftanlage 1 in einer schematischen Draufsicht sowie einer schematischen Vorderansicht, nachdem das letzte Rotorblatt 12 c montiert wurde. Neben der Windkraftanlage 1 ist der Turmdrehkran 4 mit dem Hauptausleger 29 und dem Gegenausleger 30 schematisch dargestellt. Wie der Figur 11 entnehmbar, besteht beim Abklettern des Turmdrehkrans 4 aufgrund des geringen Abstands des Turmdrehkrans 4 zu dem Turmbauwerk stets die Gefahr, dass der Hauptausleger 29 oder der Gegenausleger 30 entweder mit der Gondel 13 oder den Rotorblättern 12 kollidieren.

Zum Abklettern des Turmdrehkrans 4 wird daher zunächst der Turmdrehkran gegebenenfalls unter Drehung des Rotorsterns 4 in eine Abkletterposition geschwenkt, in welcher sein Gegenausleger 30 in die Rotationsebene des Rotorsterns ragt und sein Hauptausleger 29 sich im Wesentlichen in Richtung der Gondel 13 erstreckt. Diese erste Abkletterposition ist in Figur 12 dargestellt. Zugleich wird der Rotorstern mittels des Getriebes der Windkraftanlage 1 ebenfalls in eine Abkletterposition gedreht, in welcher der Gegenausleger 30 jeweils zwischen zwei Rotorblättern 12 in die Rotationsebene des Rotorsterns ragt und in welcher zwischen den beiden Rotorblättern 12 für die Abkletterbewegung des Turmdrehkrans 4 ausreichend Platz vorhanden ist. In dieser Abkletterposition wird ein Turmstück 5 des Turmdrehkrans 4 abgeklettert, wobei durch die Stellung der Rotorblätter 12 das ungehinderte Abklettern des Turmdrehkrans 4 ermöglicht ist. Das Abklettern der Turmstücke 5 erfolgt somit auf der den Rotorblättern 12 abgewandten Seite der Windkraftanlage 1.

Anschließend wird der Rotorstern mit den Rotorblättern 12 mittels des Getriebes weiter gedreht in die nächste Abkletterposition (siehe Fig. 13), in welcher wiederum der Gegenausleger 30 mit ausreichend senkrechtem Abstand zwischen zwei Rotorblättern 12 in die Rotationsebene des Rotorsterns ragt. In dieser nächsten Abkletterposition wird nun das nächste Turmstück 5 abgeklettert. Muss zum Abklettern der Turmstücke 5 der Turmdrehkran geschwenkt werden, kann der Hauptausleger 29 zunächst noch oberhalb der Gondel 13 über die Gondel 13 hinweg geschwenkt werden. Die Gondel 13 ist auch beim Abklettern in ihrer Drehbewegung blockiert, um Kollisionen mit dem Turmdrehkran 4 zu vermeiden. Beim Abklettern wird der Rotorstern nun stets so gedreht, dass der Gegenausleger 30 und der Rotorstern jeweils zahnradartig ineinander greifen, so dass der Gegenausleger 30 zwischen zwei Rotorblättern 12 ausreichend Platz für die jeweils nächste Abkletterbewegung hat. Sobald sich der Hauptausleger 29 unterhalb der Gondel 13 befindet, kann der Abklettervorgang dann ohne weiteres Verdrehen des Rotorsterns erfolgen, wobei der Turmdrehkran 4 dann auch wieder weitgehend frei geschwenkt werden kann.

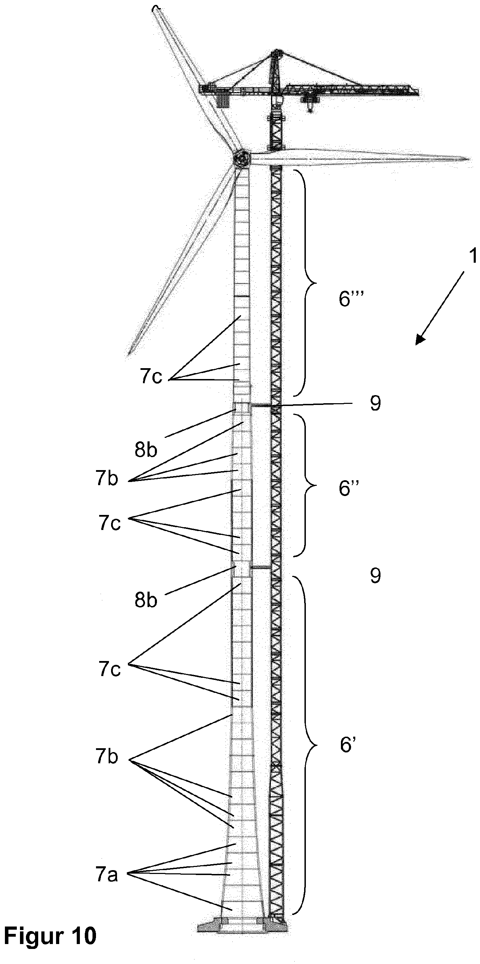

Anstelle des in den Figuren 1 bis 4 gezeigten Aufbaus kann das Turmbauwerk 6 jedoch auch zwei untere Abschnitte 6', 6" aus Betonfertigteilen 7 aufweisen, welche jeweils mit einem Kopflagerelement 8 versehen sind und auf welche jeweils eine Vorspannung aufgebracht wurde. Eine derartige Ausführung eines Turmbauwerks 6 ist in Figur 10 gezeigt. Hierbei wird, wie zu Figur 1 beschrieben, zunächst der Abschnitt 6' des Turmbauwerks 6 aus Betonfertigteilen 7 aufgebaut. Nach Fertigstellung des ersten Abschnitts 6' wird ein Kopflagerelement 8, welches vorliegend ein Zwischenspannstück 8b ist, auf den ersten Abschnitt 6' aufgesetzt und der erste Abschnitt 6' wird mittels weniger Spannglieder 28 (siehe Fig. 7), beispielsweise mittels vier bis acht Spanngliedern 28 zwischen dem Fundament 2 und dem Zwischenspannstück 8b vorgespannt. Auch das Zwischenspannstück 8b ist verstärkt ausgeführt und daher zur Aufnahme der Spannkräfte aus der Abspannung des Turmdrehkrans 4 geeignet. Analog zu dem Turmbauwerk der Figur 2 wird nach Fertigstellung des ersten Abschnitts 6' der Turmdrehkran 4 aufgeklettert, um die Hakenhöhe zu erhöhen. Der Turmdrehkran 4 wird dabei mittels einer Abspannvorrichtung 9 mit einer Abspannstange an dem Zwischenspannstück 8b verankert.

Das Zwischenspannstück 8b kann dazu ebenfalls wie das Übergangsstück 8a einen Stahlmantel 19 aufweisen, oder es kann direkt im Außenumfang eines Zwischenspannstücks 8b aus Beton eine Ausnehmung vorgesehen sein, in welcher, ähnlich wie in Figur 9 beschrieben, eine Abspannvorrichtung 9 bzw. ein Lagerbock 20 abstützbar ist. Die Befestigung an dem Zwischenspannstück 8b sowie die Krafteinleitung in das Zwischenspannstück 8b kann, ebenso wie bei den Figuren 8 und 9 beschrieben, über eingegossene Muffenstäbe erfolgen. Nach Fertigstellung des ersten Abschnitts 6' sowie dem Aufbringen der Vorspannung wird dann mittels des Turmdrehkrans 4 ein zweiter Abschnitt 6" ebenfalls aus Betonfertigteilen 7 auf dem Zwischenspannstück 8b errichtet. Auf diesem zweiten Abschnitt 6" wird schließlich ebenfalls ein Kopflagerelement 8 aufgesetzt, das vorliegend ebenfalls ein Zwischenabspannstück 8b ist. Zum weiteren Aufbau der Windkraftanlage 1 wird der Turmdrehkran 4 an dem zweiten Zwischenabspannstück 8b verankert, um schließlich den letzten Abschnitt 6"' zu montieren. Vorliegend besteht der letzte Abschnitt 6"' ebenfalls aus Betonfertigteilen 7. Ebenso kann jedoch statt des zweiten Zwischenabspannstückes 8b ein Übergangsstück 8a auf den zweiten Abschnitt 6" montiert werden und analog zu dem Turmbauwerk 6 der Fig. 2 ein dritter Abschnitt 6"' aus Stahlsegmenten 10 auf dem Übergangsstück 8a montiert werden. Weiterhin muss der Turmdrehkran 4 auch nicht zwangsläufig an dem Zwischenabspannstück 8b verankert werden. Es ist auch möglich, die Abspannvorrichtung 9 höhenversetzt zu dem Zwischenabspannstück 8b an einem anderen Betonfertigteil 7 anzubringen.

Der Turmdrehkran 4 ist bei der Ausführung der Figur 10 zweifach an dem Turmbauwerk 6 der Windkraftanlage 1 verankert, so dass sehr große Montagehöhen erreichbar sind. Es ist jedoch auch möglich, die Abspannvorrichtung 9 an dem ersten Zwischenspannstück 8b zu lösen und den Turm nur an dem zweiten Zwischenspannstück 8b bzw. an dem Übergangsstück 8a zu verankern, um einen weiteren oder den letzten Abschnitt 6"' des Turmbauwerks 6 zu errichten.

Wie der Figur 10 weiterhin entnehmbar, ist das Turmbauwerk 6 der Windkraftanlage 1 dabei aus verschiedenartig geformten Betonfertigteilen 7 aufgebaut. So ist der erste Abschnitt 6' des Turmbauwerks 6 in einem Fußbereich aus parabelförmigen Betonfertigteilen 7a aufgebaut, welche für einen vergleichsweise großen Fußdurchmesser und hierdurch für eine hohe Steifigkeit des Turmbauwerks sorgen. Zur Durchmesserreduktion sind auf den parabelförmigen Betonfertigteilen 7a im Mittelbereich konische Betonfertigteile 7b angeordnet, auf welchen dann zylindrische Betonfertigteile 7c in einem Kopfbereich angeordnet sind. Auf dem ersten Abschnitt 6' ist schließlich das Zwischenabspannstück 8b angeordnet, mittels welchem der erste Abschnitt 6' verspannt wird. Der zweite Abschnitt 6" ist vorliegend in seinem Fußbereich aus zylindrischen Betonfertigteilen 7c und in seinem Kopfbereich aus konischen Betonfertigteilen 7b aufgebaut. Durch die konischen Betonfertigteile 7b kann eine vorteilhafte weitere Durchmesserreduktion des Turmbauwerks 6 erreicht werden, die eine Anordnung des Rotorsterns nahe der Turmachse ermöglicht.

Die Figuren 6 und 7 zeigen zwei verschiedene Ausführungen von Zwischenspannstücken 8b. Nach der in der Figur 6 gezeigten Ausführung weist das Zwischenspannstück 8b an seinem Innenumfang einen konsolenartigen Vorsprung 25 auf, in welchem eine Vielzahl von Durchgangsöffnungen 26 ausgebildet sind. Durch die Durchgangsöffnungen 26 sind dann jeweils die Spannglieder (nicht dargestellt) hindurchführbar, wobei ein Teil der Spannglieder mittels entsprechender Ankerplatten 31 (s. Fig. 14) auf dem Vorsprung 25 festlegbar sind, während ein anderer Teil der Spannglieder 28 durch die Durchgangsöffnungen 26 bis zu dem nächsten Zwischenspannstück 8b bzw. dem obersten Kopflagerelement 8 hindurchgeführt wird.

Nach Figur 7 sind am Innenumfang des Zwischenspannstücks 8b lediglich einzelne Konsolen 27 angegossen, an welchen, wie oben beschrieben, ein Teil der Spannglieder 28 festlegbar ist. Der übrige Teil der Spannglieder 28 erstreckt sich hingegen zwischen den Konsolen 27 direkt von dem Fundament 2 bis zum nächsten Zwischenspannstück 8b, dem Übergangsstück 8a oder dem obersten Kopflagerelement 8.

Figur 14 zeigt eine weitere Ausführung eines Zwischenspannstücks 8b. Dieses weist ebenso wie das der Figur 6 an seinem Innenumfang einen konsolenartigen Vorsprung 25 auf. An diesem Vorsprung 25 sind nun, ähnlich wie in Figur 7 gezeigt, einzelne Konsolen 27 ausgebildet, an welchen ein Teil der Spannglieder 28 mittels einer Ankerplatte 31 und einer darunter angeordneten Stahlplatte 32 festlegbar ist. Lediglich im Bereich der Konsolen 27 sind in dem Vorsprung 25 Durchgangsöffnungen 26 ausgebildet, um die Spannglieder bis an die Oberseite der angeformten Konsolen 27 hindurchführen und dort festlegen zu können. Der übrige Teil der Spannglieder 28 liegt hingegen nur an dem Innenumfang des Vorsprungs 25 an und ist dadurch ausreichend geführt.

Dadurch, dass der Turmdrehkran 4 ausschließlich an Bauteilen der Windkraftanlage 1, vorliegend dem Fundament 2 sowie einem Kopflagerelement 8 verankert ist, benötigt dieser zum Aufstellen einen minimalen Platzbedarf und keinerlei zusätzlich Bauteile. So benötigt der Turmdrehkran 4 lediglich etwa ein Viertel der Aufstellfläche eines großen Mobilkrans, der oftmals eine Fläche von 4000 m² benötigt. Auch der Transport eines Turmdrehkrans 4 mittels herkömmlicher Lkw zum Montageort ist wesentlich einfacher als der eines Mobilkrans, welcher große Zufahrtswege benötigt. Ebenso kann die Bereitstellung zusätzlichen Ballastes entfallen, so dass der Turmdrehkran 4 trotz seiner Größe und Tragfähigkeit vergleichsweise kostengünstig am Montageort aufgebaut werden kann. Da es zudem mittels der erfindungsgemäßen Verankerung des Turmdrehkrans 4 nur an Bauteilen der Windkraftanlage 1 möglich ist, nahezu die gesamte Windkraftanlage 1 mittels eines einzigen Turmdrehkrans 4 aus vorgefertigten Bauteilen 7, 10, 11, 12, 13 aufzubauen, kann der Einsatz teurer und leistungsstarker Mobilkrane vermieden werden. Auch ein häufiger Standortwechsel des Kranes kann durch die Verwendung eines direkt an Bauteilen der Windkraftanlage 1 verankerten Turmdrehkrans vermieden werden. Lediglich bei sehr schweren einzelnen Teilen oder zum Nachführen einzelner Bauteile kann zeitweise ein zusätzlicher Mobilkran erforderlich sein. Dieser benötigt dann, je nach Einsatzzweck, jedoch nur eine geringere Hakenhöhe oder geringere Tragkraft und ist nur über einen vergleichsweise kurzen Zeitraum erforderlich. Es ist somit möglich, mittels der erfindungsgemäßen Verankerung des Turmdrehkrans 4 auch in ungünstigem Gelände, beispielsweise in Waldgebieten, sehr hohe Windkraftanlagen 1 mit Nabenhöhen von über 150 m vergleichsweise kostengünstig zu errichten.

Die Erfindung ist nicht auf die dargestellten Ausführungsbeispiele beschränkt. Beispielsweise kann der Turm 6 der Windkraftanlage 1 auch als reiner Betonturm mit zwei Abschnitten 6' und 6" ausgeführt werden, oder das gesamte Turmbauwerk 6 der Windkraftanlage 1 kann aus Stahlfertigteilen aufgebaut werden, welche miteinander verschraubt und/oder mittels Spanngliedern miteinander verspannt werden.

Weitere Abwandlungen und Kombinationen im Rahmen der Patentansprüche fallen ebenfalls unter die Erfindung.

### Bezugszeichen

- 1: Windkraftanlage
- 2: Fundament
- 3: Fundamentanker
- 4: Turmdrehkran
- 5: Turmstück
- 6: Turm, Turmbauwerk
- 6': erster Abschnitt des Turmbauwerks
- 6": zweiter Abschnitt des Turmbauwerks
- 6"': dritter Abschnitt des Turmbauwerks
- 7: Betonfertigteil
- 7a: parabelförmiges Betonfertigteil
- 7b: konisches Betonfertigteil
- 7c: zylindrisches Betonfertigteil
- 8: Kopflagerelement
- 8a: Übergangsstück
- 8b: Zwischenspannstück
- 9: Abspannvorrichtung
- 10: Stahlsegment
- 11: Nabe
- 12: Rotorblatt
- 13: Gondel
- 14: Basis
- 15: obere Aufnahmefläche
- 18: Betonelement
- 19: Stahlmantel
- 20: Lagerbock
- 21: Schraubenmutter
- 22: Knaggen
- 23: Ausnehmung
- 24: Seitenfläche
- 25: Vorsprung
- 26: Durchgangsöffnung
- 27: Konsole
- 28: Spannglieder
- 29: Hauptausleger
- 30: Gegenausleger
- 31: Ankerplatte
- 32: Stahlplatte
- H1: erste Hakenhöhe
- H2: zweite Hakenhöhe
- M: Montageposition

## Patentansprüche

1. Verfahren zum Errichten einer Windkraftanlagen (1) mit Funktionseinheiten (11, 12, 13), mit einem Fundament (2) und einem Turmbauwerk (6) aus wenigstens zwei Abschnitten (6', 6"), wobei zumindest ein erster Abschnitt (6') des Turmbauwerks (6) aus ringförmigen oder ringsegmentförmigen Betonfertigteilen (7) auf dem Fundament (2) erstellt wird, auf dem oberen Ende des ersten Abschnitts (6') ein Kopflagerelement (8) angeordnet wird und die Fertigteile (7) des ersten Abschnitts (6') miteinander, mit dem Kopflagerelement (8) und mit einem Fußlagerelement des Fundaments (2) verbunden werden, indem die Betonfertigteile (7) des ersten Abschnitts (6') mittels Spanngliedern (28) zwischen dem Kopflagerelement (8) und dem Fußlagerelement vorgespannt werden, **dadurch gekennzeichnet, dass** das Kopflagerelement (8) einen zumindest zweischaligen Aufbau mit einem inneren Betonelement (18) und einem äußeren Stahlmantel (19) aufweist und dass nach Verbinden des ersten Abschnitts (6') ein Turmdrehkran (4) an dem Kopflagerelement (8) horizontal verankert wird und anschließend ein zweiter Abschnitt (6") des Turmbauwerks (6) mit Hilfe des Turmdrehkrans (4) montiert wird.

2. Verfahren nach dem vorhergehenden Anspruch, **dadurch gekennzeichnet, dass** der Turmdrehkran (4) an einem Übergangsstück (8a) zur Verbindung eines ersten Abschnitts (6') aus Beton, insbesondere aus ringförmigen oder ringsegmentförmigen Betonfertigteilen (7), und eines zweiten Abschnitts (6") aus Stahl verankert wird und der zweite Abschnitt (6") des Turmbauwerks (6) mittels des Turmdrehkrans (4) aus ringförmigen Stahlsegmenten (10) erstellt wird.

3. Verfahren nach einem der vorhergehenden Ansprüche, **dadurch gekennzeichnet, dass** ein unterstes Turmstück (5) des Turmdrehkrans (4) mit Fundamentankern (3) direkt in dem Fundament (2) der Windkraftanlage (1) verankert wird,
wobei vorzugsweise ein erster Teil der Fundamentanker (3) in einer oberen Aufnahmefläche (15) des Fundaments (2) und der andere Teil der Fundamentanker (3) in einer Basis (14) des Fundaments (2) angeordnet wird und ein stufenförmiges unterstes Turmstück (5) des Turmdrehkrans (4) in dem Fundament (2) verankert wird.

4. Verfahren nach einem der vorhergehenden Ansprüche, dadurch genkennzeichnet, dass der zweite Abschnitt (6") des Turmbauwerks (6) mittels des Turmdrehkrans (4) aus vorzugsweise ringförmigen oder ringsegmentförmigen Betonfertigteilen (7) montiert wird, ein zweites Kopflagerelement (8) auf dem oberen Ende des zweiten Abschnitts (6") angeordnet wird, die Betonfertigteile des zweiten Abschnitts (6") zwischen dem zweiten Kopflagerelement (8) und dem Fußlagerelement und/oder dem ersten Kopflagerelement (8) miteinander verbunden, vorzugsweise mittels Spanngliedern (28) vorgespannt werden, anschließend der Turmdrehkran (4) an dem zweiten Kopflagerelement (8) horizontal verankert wird und ein weiterer Abschnitt (6"') des Turmbauwerks (6) mit Hilfe des Turmdrehkrans (4) montiert wird.

5. Verfahren nach einem der vorhergehenden Ansprüche, dadurch genkennzeichnet, dass nach der Montage eines obersten Abschnitts des Turmbauwerks (6) aus Stahl oder Stahlsegmenten (10) der Turmdrehkran (4) mittels einer weiteren Abspannvorrichtung (9) und/oder einem Dämpfungselement mit dem obersten Abschnitt verbunden wird.

6. Verfahren nach einem der vorhergehenden Ansprüche, dadurch genkennzeichnet, dass nach der Fertigstellung des Fundaments (2) der Turmdrehkran (4) auf die Fundamentanker (3) montiert wird und der erste Abschnitt (6') des Turmbauwerks (6) zumindest teilweise mittels des Turmdrehkrans (4) montiert wird,
wobei vorzugsweise der Turmdrehkran (4) zunächst mit einer ersten Hakenhöhe (H1) auf die Fundamentanker (3) montiert wird, dann der erste Abschnitt (6') des Turmbauwerks (6) erstellt und vorgespannt wird und anschließend der Turmdrehkran (4) auf eine zweite Hakenhöhe (H2) aufgeklettert wird und an dem Kopflagerelement (8) verankert wird.

7. Verfahren nach einem der vorhergehenden Ansprüche, **dadurch gekennzeichnet, dass** nach der Montage des Turmbauwerks (6) die Funktionsgruppen (11, 12, 13) der Windkraftanlage (1) mittels des Turmdrehkrans (4) montiert werden, wobei vorzugsweise die Drehbewegung der Gondel (13) nach ihrer Montage blockiert wird.

8. Verfahren nach einem der vorhergehenden Ansprüche, **dadurch gekennzeichnet, dass** Rotorblätter (12) der Windkraftanlage (1) einzeln mittels des Turmdrehkrans (4) montiert werden, wobei die Nabe (11) jeweils mittels des Getriebes der Windkraftanlage (1) in eine Montageposition gedreht wird, in welcher die Rotorblätter (12) nacheinander montiert werden.

9. Verfahren nach einem der vorhergehenden Ansprüche, **dadurch gekennzeichnet, dass** zum Abklettern des Turmdrehkrans (4) der Turmdrehkran (4) und ein Rotorstern jeweils in eine Abkletterposition gedreht werden, in welcher ein Gegenausleger (30) des Turmdrehkrans (4) zwischen zwei Rotorblättern (12) in die Rotationsebene des Rotorsterns ragt und in welcher ein Hauptausleger (29) des Turmdrehkrans (4) im Wesentlichen in Richtung der Gondel 13 orientiert ist, in dieser Abkletterposition ein Turmstück (5) des Turmdrehkrans (4) abgeklettert wird, und anschließend der Rotorstern in die nächste Abkletterposition gedreht wird.

10. Verfahren nach einem der vorhergehenden Ansprüche, **dadurch gekennzeichnet, dass** die Betonfertigteile (7) und/oder die ringförmigen Stahlsegmente (10) und/oder die Funktionseinheiten (11, 12, 13) der Windkraftanlage mittels LKW bis in den Ausladungsbereich des Turmdrehkrans (4) transportiert werden und direkt von dem Turmdrehkran (4) aufgenommen werden.

11. Windkraftanlage (1) mit Funktionseinheiten (11, 12, 13), einem Turmbauwerk (6) aus wenigstens zwei Abschnitten (6', 6") sowie einem Fundament (2), wobei zumindest ein erster Abschnitt (6') des Turmbauwerks (6) aus ringförmigen oder ringsegmentförmigen Betonfertigteilen (7) besteht und die Fertigteile (7) zwischen einem auf seinem oberen Ende angeordneten Kopflagerelement (8) und einem Fußlagerelement eines Fundaments (2) des Turmbauwerks (6) miteinander verbunden sind, indem die Fertigteile (7) des ersten Abschnitts (6') mittels Spanngliedern zwischen dem Kopflagerelement (8) und dem Fußlagerelement vorgespannt sind, **dadurch gekennzeichnet, dass** das Kopflagerelement (8) wenigstens eine Abspannvorrichtung (9) zur horizontalen Verankerung eines Turmdrehkrans (4) aufweist,
wobei das Kopflagerelement (8) einen zumindest zweischaligen Aufbau mit einem inneren Betonelement (18) und einem äußeren Stahlmantel (19) aufweist.

12. Windkraftanlage nach dem vorhergehenden Anspruch, dadurch genkennzeichnet, dass das Kopflagerelement (8) ein Übergangsstück (8a) zur Verbindung eines ersten Abschnitts (6') aus Beton und eines zweiten Abschnitts (6") aus Stahl ist, wobei das Turmbauwerk (6) als Hybridturm mit wenigstem einem ersten Abschnitt (6') aus Betonfertigteilen (7) und wenigstens einem zweiten Abschnitt (6") aus Stahl ausgebildet ist, oder dass das Kopflagerelement (8) ein Zwischenspannstück (8b) zur Verbindung eines ersten Abschnitts (6') aus Beton und eines zweiten Abschnitts (6") aus Beton ist.

13. Windkraftanlage nach einem der vorhergehenden Ansprüche 11 bis 12, **dadurch gekennzeichnet, dass** die Abspannvorrichtung (9), insbesondere ein Lagerbock (20) zur Aufnahme einer Abspannstange, zumindest teilweise lösbar an dem Kopflagerelement (8) angeordnet ist, insbesondere angeschraubt ist,
wobei vorzugsweise Befestigungsmittel, insbesondere Schraubenmuttern (21), zur lösbaren Befestigung der Abspannvorrichtung (9) in dem Kopffagerelement (8) angeordnet sind, insbesondere in dem Kopflagerelement (8) fest eingegossen sind.

14. Windkraftanlage nach einem der vorhergehenden Ansprüche 11 - 13, **dadurch gekennzeichnet, dass** an dem Außenumfang des Kopflagerelements (8) Knaggen (22) angeschweißt sind, zwischen welchen die Abspannvorrichtung (9) in Umfangsrichtung formschlüssig angeordnet ist oder anordenbar ist, oder dass in dem Außenumfang des Kopflagerelements (8), insbesondere in dem Stahlmantel (19), eine Ausnehmung (23) ausgebildet ist, in welcher die Abspannvorrichtung (9) in Umfangsrichtung formschlüssig angeordnet ist oder anordenbar ist.

15. Windkraftanlage nach einem der vorhergehenden Ansprüche 11 - 14, **dadurch gekennzeichnet, dass** in dem Fundament (2) Fundamentanker (3) zur Befestigung des Turmdrehkrans (4) angeordnet sind, wobei vorzugsweise das Fundament (2) stufenförmig mit einer Basis (14) und einer oberen Aufnahmefläche (15) für das Turmbauwerk (6) ausgebildet ist und ein erster Teil der Fundamentanker (3) in der oberen Aufnahmefläche (15) und der andere Teil der Fundamentanker (3) in der Basis (14) angeordnet ist.

16. Windkraftanlage nach einem der vorhergehenden Ansprüche 11 - 15, **dadurch gekennzeichnet, dass** der oder die Abschnitte (6', 6") aus Stahl oder Stahlsegmenten (10) eine weitere Abspannvorrichtung (9) und/oder ein Dämpfungselement aufweist.

17. Windkraftanlage nach einem der vorhergehenden Ansprüche 11 - 16, **dadurch gekennzeichnet, dass** das Turmbauwerk (6) aus parabelförmigen, konischen und zylindrischen Betonfertigteilen (7) aufgebaut ist, wobei der erste Abschnitt (6') in einem Fußbereich aus parabelförmigen, in einem Mittelbereich aus konischen und in einem Kopfbereich aus zylindrischen Betonfertigteilen (7) besteht.

18. Windkraftanlagen nach dem vorhergehenden Anspruch, **dadurch gekennzeichnet, dass** auf dem ersten Abschnitt (6') ein Zwischenabspannstück (8b) angeordnet ist, und dass der zweite Abschnitt (6") des Turmbauwerks (6) aus zylindrischen und konischen Betonfertigteilen (7) aufgebaut ist, vorzugsweise in einem Fußbereich aus zylindrischen und in einem Kopfbereich aus konischen Betonfertigteilen (7) aufgebaut ist, und dass auf dem zweiten Abschnitt das Übergangsstück (8a) angeordnet ist.

## Claims

1. A method for erecting a wind power plant (1) having functional units (11, 12, 13), having a foundation (2) and a tower structure (6) consisting of two or more segments (6', 6"), at least one first segment (6') of the tower structure (6) being produced from annular or annularly segmented prefabricated concrete elements (7) on the foundation (2), a head bearing element (8) being disposed on the top end of the first segment (6'), and the prefabricated elements (7) of the first segment (6') being connected to each other, to the head bearing element (8), and to a foot bearing element of the foundation (2), in that the prefabricated concrete elements (7) of the first segment (6') are pretensioned by means of tendons (28) between the head bearing element (8) and the foot bearing element, **characterized in that** the head bearing element (8) comprises an at least double-shelled structure having an inner concrete element (18) and an outer steel jacket (19), and that after connecting the first segment (6') a rotary tower crane (4) is horizontally anchored to the head bearing element (8) and then a second segment (6") of the tower structure (6) is assembled by means of the rotary tower crane (4).

2. The method according to the preceding claim, **characterized in that** the rotary tower crane (4) is anchored on a transition piece (8a) for connecting a first segment (6') made of concrete, particularly of annular or annularly segmented prefabricated concrete elements (7) and a second segment (6") made of steel, and the second segment (6") of the tower structure (6) is produced from annular steel segments (10) by means of the rotary tower crane (4).

3. The method according to any one of the preceding claims, **characterized in that** a lowest tower component (5) of the rotary tower crane (4) is directly anchored to the foundation (2) of the wind power plant (1) by means of foundation anchors (3),
wherein a first part of the foundation anchor (3) is disposed in a top receiving surface (15) of the foundation (2) and the other part of the foundation anchor (3) is disposed in a base (14) of the foundation (2), and a step-shaped bottom tower component (5) of the rotary tower crane (4) is anchored in the foundation (2).

4. The method according to any one of the preceding claims, **characterized in that** the second segment (6") of the tower structure (6) is assembled by means of the rotary tower crane (4) from preferably annular or annularly segmented prefabricated concrete elements (7), a second head bearing element (8) is disposed on the top end of the second segment (6"), the prefabricated concrete elements of the second segment (6") are connected to each other between the second head bearing element (8) and the foot bearing element and/or the first head bearing element (8), preferably pretensioned by means of tendons (28), the rotary tower crane (4) is then horizontally anchored on the second head bearing element (8), And a further segment (6"') of the tower structure (6) is assembled by means of the rotary tower crane (4).

5. The method according to any one of the preceding claims, **characterized in that**, after assembling a topmost segment of the tower structure (6) made of steel or steel segments (10), the rotary tower crane (4) is connected to the topmost segment by means of a further tensioning device (9) and/or a damping element.

6. The method according to any one of the preceding claims, **characterized in that**, after completing the foundation (2), the rotary tower crane (4) is assembled on the foundation anchor (3) and the first segment (6') of the tower structure (6) is assembled at least partially by means of the rotary tower crane (4),
wherein the rotary tower crane (4) is preferably first assembled on the foundation anchor (3) by means of a first hook height (H1), then the first segment (6') of the tower structure (6) is produced and pretensioned, and then the rotary tower crane (4) is vertically raised to a second hook height (H2) and anchored on the head bearing element (8).

7. The method according to any one of the preceding claims, **characterized in that**, after assembling the tower structure (6), the functional groups (11, 12, 13) of the wind power plant (1) are assembled by means of the rotary tower crane (4), wherein the rotary motion of the nacelle (13) is preferably blocked after assembling the same.

8. The method according to any one of the preceding claims, **characterized in that**, rotor blades (12) of the wind power plant (1) are assembled separately by means of the rotary tower crane (4), wherein the hub (11) is rotated in each case by means of the gearbox of the wind power plant (1) into an assembly position in which each of the rotor blades (12) are assembled sequentially.

9. The method according to any one of the preceding claims, **characterized in that**, for descending of the rotary tower crane (4) the rotary tower crane (4) and a rotor star are each rotated into a vertical descending position in which one counter jib (30) of the rotary tower crane (4) protrudes between two rotor blades (12) into the plane of rotation of the rotor star and in which a main jib (29) of the rotary tower crane (4) is oriented substantially in the direction of the nacelle (13), a tower component (5) of the rotary tower crane (4) is descended in said vertical descending position, and then the rotor star is rotated into the next descending position.

10. The method according to any one of the preceding claims, **characterized in that**, the prefabricated concrete elements (7) and/or the annular steel segments (10) and/or the functional units (11, 12, 13) of the wind power plant are transported to the unloading area of the rotary tower crane (4) via heavy goods vehicle and are picked up directly by the rotary tower crane (4).

11. A wind power plant (1) having functional units (11, 12, 13), a tower structure (6) comprising two or more segments (6', 6"), and a foundation (2), at least one first segment (6') of the tower structure (6) being made from annular or annularly segmented prefabricated concrete elements (7) and the prefabricated elements (7) being connected to each other between a head bearing element (8) disposed at the top end thereof and a foot bearing element of a foundation (2) of the tower structure (6), in that the prefabricated elements (7) of the first segment (6') are pretensioned by means of tendons between the head bearing element (8) and the foot bearing element, **characterized in that** the head bearing element (8) comprises at least one tensioning device (9) for horizontally anchoring a rotary tower crane (4),
wherein the head bearing element (8) comprises an at least two-shelled structure having an inner concrete element (18) and an outer steel jacket (19).

12. The wind power plant according to the preceding claim, **characterized in that** the head bearing element (8) is a transition piece (8a) for connecting a first segment (6') made of concrete and a second segment (6") made of steel, wherein the tower structure (6) is implemented as a hybrid tower having at least one first segment (6') made of prefabricated concrete elements (7) and at least one second segment (6") made of steel, or that the head bearing element (8) is an intermediate tension component (8b) for connection a first segment (6') made of concrete and a second segment (6") made of concrete.

13. The wind power plant according to any one of the preceding claims 11 through 12, **characterized in that**, the tensioning device (9), particularly a bearing block (20) for receiving a tensioning rod, is at least partially removably disposed on the head bearing element (8), particularly screwed on,
wherein preferably fastening means, particularly threaded nuts (21), are disposed in the head bearing element (8) for removably fastening the tensioning device (9), particularly are fixedly molded in the head bearing element (8).

14. The wind power plant according to any one of the preceding claims 11-13, **characterized in that**, cleats (22) are welded to the outer circumference of the head bearing element (8), between which the tensioning device (9) is or can be positively disposed, or that a recess (23) is implemented in the outer circumference of the head bearing element (8), particularly in the steel jacket (19), in which the tensioning device (9) is or can be disposed positively in the circumferential direction.

15. The wind power plant according to any one of the claims 11-14, **characterized in that**, foundation anchors (3) are disposed in the foundation (2) for attaching the rotary tower crane (4),
wherein the foundation (2) is preferably implemented in a stepped form having a base (14) and a top receiving surface (15) for the tower structure (6), and a first part of the foundation anchor (3) is disposed in the top receiving surface (15) and the other part of the foundation anchor (3) is disposed in the base (14).

16. The wind power plant according to any one of the claims 11-15, **characterized in that** the segments (6', 6") made of steel or steel segments (10) comprise a further tensioning device (9) and/or a damping element.

17. The wind power plant according to any one of the claims 11-16, **characterized in that**, the tower structure (6) is constructed of parabolic, conical, and cylindrical prefabricated concrete elements (7), wherein the first segment (6') is made of a parabolic prefabricated concrete elements (7) in a foot region, of conical elements in a middle region, and of cylindrical elements in a head region.

18. The wind power plant according to the preceding claim, **characterized in that**, an intermediate tensioning component (8b) is disposed on the first segment (6'), and that the second segment (6") of the tower structure (6) is constructed of cylindrical and conical prefabricated concrete elements (7), preferably of cylindrical elements (7) in a foot area and of conical elements in a head area, and that the transition element (8a) is disposed on the second segment.

## Revendications

1. Procédé pour édifier une centrale éolienne (1) avec des unités fonctionnelles (11, 12, 13), avec une fondation (2) et un ouvrage de tour (6) composé au moins de deux sections (6', 6"), sachant qu'une première section (6') au moins de l'ouvrage de tour (6) est réalisée à partir d'éléments en béton préfabriqués (7) annulaires ou en forme de segment annulaire sur la fondation (2), un élément de crapaudine supérieure (8) est disposé sur l'extrémité supérieure de la première section (6') et les éléments préfabriqués (7) de la première section (6') sont reliés les uns avec les autres, avec l'élément de crapaudine supérieure (8) et avec un élément de crapaudine inférieure de la fondation (2) en mettant sous précontrainte les éléments préfabriqués (7) en béton de la première section (6') entre l'élément de crapaudine supérieure (8) et l'élément de crapaudine inférieure au moyen de membres de précontrainte (28), **caractérisé en ce que** l'élément de crapaudine supérieure (8) présente une structure au moins à double paroi avec un élément en béton intérieur (18) et une paroi en acier extérieure (19) et que, après le raccordement de la première section (6'), une grue à tour pivotante (4) est ancrée horizontalement sur l'élément de crapaudine supérieure (8) et, ensuite, une seconde section (6") de l'ouvrage de tour (6) est montée à l'aide de la grue à tour pivotante (4).

2. Procédé selon la revendication précédente, **caractérisé en ce que** la grue à tour pivotante (4) est ancrée sur un élément de transition (8a) pour le raccordement d'une première section (6') en béton, en particulier en éléments en béton préfabriqués (7) annulaires ou en forme de segment annulaire, et d'une seconde section (6") en acier et la seconde section (6") de l'ouvrage de tour (6) est réalisée à l'aide de la grue à tour pivotante (4) à partir de segments en acier annulaires (10).

3. Procédé selon l'une des revendications précédentes, **caractérisé en ce qu'**une pièce (5) de tour la plus basse de la grue à tour pivotante (4) est ancrée à l'aide d'ancres de fondation (3) directement dans la fondation (2) de la centrale éolienne (1),
sachant que, de préférence, une première partie des ancres de fondation (3) est disposée dans une surface d'accueil supérieure (15) de la fondation (2) et l'autre partie des ancres de fondation (3) dans une base (14) de la fondation (2) et une pièce de tour (5) en escalier la plus basse de la grue à tour pivotante (4) est ancrée dans la fondation (2).

4. Procédé selon l'une des revendications précédentes, **caractérisé en ce que** la seconde section (6") de l'ouvrage de tour (6) est montée à l'aide de la grue à tour pivotante (4) de préférence à partir d'éléments en béton préfabriqués (7) annulaires ou en forme de segment annulaire, un second élément de crapaudine supérieure (8) est disposé sur l'extrémité supérieure de la seconde section (6"), les éléments préfabriqués en béton de la seconde section (6") sont reliés les uns avec les autres entre le second élément de crapaudine supérieure (8) et l'élément de crapaudine inférieure et/ou le premier élément de crapaudine supérieure (8), de préférence mis sous précontrainte au moyen de membres de précontrainte (28), ensuite, la grue à tour pivotante (4) est ancrée horizontalement sur le second élément de crapaudine supérieure (8) et une autre section (6"') de l'ouvrage de tour (6) est montée à l'aide de la grue à tour pivotante (4).

5. Procédé selon l'une des revendications précédentes, **caractérisé en ce que**, après le montage d'une section la plus haute de la de l'ouvrage de tour (6) en acier ou segments d'acier (10), la grue à tour pivotante (4) est reliée avec la section la plus haute à l'aide d'un tirant d'ancrage (9) supplémentaire et/ou un élément d'amortissement.

6. Procédé selon l'une des revendications précédentes, **caractérisé en ce que**, après l'achèvement de la fondation (2), la grue à tour pivotante (4) est montée sur les ancres de fondation (3) et la première section (6') de l'ouvrage de tour (6) est montée au moins partiellement à l'aide de la grue à tour pivotante (4),
sachant que, de préférence, la grue à tour pivotante (4) est d'abord montée avec une première hauteur de crochet (H1) sur les ancres de fondation (3), ensuite, la première section (6') de l'ouvrage de tour (6) est réalisée et mis sous précontrainte et, enfin, la grue à tour pivotante (4) est relevée à une seconde hauteur de crochet (H2) et ancrée sur l'élément de crapaudine supérieure (8).

7. Procédé selon l'une des revendications précédentes, **caractérisé en ce que**, après le montage de l'ouvrage de tour (6), les groupes fonctionnels (11, 12, 13) de la centrale éolienne (1) sont montés à l'aide de la grue à tour pivotante (4), sachant que, de préférence, le mouvement de rotation de la nacelle (13) est bloqué après son montage.

8. Procédé selon l'une des revendications précédentes, **caractérisé en ce que** des pales de rotor (12) de la centrale éolienne (1) sont montées individuellement à l'aide de la grue à tour pivotante (4), sachant que le moyeu (11) est respectivement tourné à l'aide de l'engrenage de la centrale éolienne (1) dans une position de montage dans laquelle les pales de rotor (12) sont montées les unes après les autres.

9. Procédé selon l'une des revendications précédentes, **caractérisé en ce que**, pour descendre la grue à tour pivotante (4), la grue à tour pivotante (4) et un croisillon de rotor sont respectivement tournés dans une position de descente, dans laquelle une contre-flèche (30) de la grue à tour pivotante (4) fait saillie entre deux pales de rotor (12) sur le plan de rotation du croisillon de rotor, et dans laquelle une flèche principale (29) de la grue à tour pivotante (4) est essentiellement orientée dans la direction de la nacelle 13, une pièce de tour (5) de la grue à tour pivotante (4) est descendue dans cette position de descente et, ensuite, le croisillon de rotor est tourné dans la prochaine position de descente.

10. Procédé selon l'une des revendications précédentes, **caractérisé en ce que** les éléments en béton préfabriqués (7) et/ou les segments en acier annulaires (10) et/ou les unités fonctionnelles (11, 12, 13) de la centrale éolienne sont transportés par camion jusque dans la zone de porte-à-faux de la grue à tour pivotante (4) et ramassés directement par la grue à tour pivotante (4).

11. Centrale éolienne (1) avec des unités fonctionnelles (11, 12, 13), un ouvrage de tour (6) composé au moins de deux sections (6', 6") ainsi qu'une fondation (2), sachant qu'une première section (6') au moins de l'ouvrage de tour (6) est réalisée à partir d'éléments en béton préfabriqués (7) annulaires ou en forme de segment annulaire et les éléments préfabriqués (7) sont reliés les uns avec les autres entre un élément de crapaudine supérieure (8) disposé sur son extrémité supérieure et un élément de crapaudine inférieure d'une fondation (2) de l'ouvrage de tour (6) en mettant sous précontrainte les éléments préfabriqués (7) de la première section (6') entre l'élément de crapaudine supérieure (8) et l'élément de crapaudine inférieure au moyen de membres de précontrainte, **caractérisée en ce que** l'élément de crapaudine supérieure (8) présente au moins un tirant d'ancrage (9) pour l'ancrage horizontal d'une grue à tour pivotante (4), sachant que l'élément de crapaudine supérieure (8) une structure au moins à double paroi avec un élément en béton intérieur (18) et une paroi en acier extérieure (19).

12. Centrale éolienne selon la revendication précédente, **caractérisée en ce que** l'élément de crapaudine supérieure (8) est un élément de transition (8a) pour le raccordement d'une première section (6') en béton et d'une seconde section (6") en acier, sachant que l'ouvrage de tour se présente sous la forme d'une tour hybride avec au moins une première section (6') en éléments en béton préfabriqués (7) et au moins une seconde section (6") en acier, ou que l'élément de crapaudine supérieure (8) est un membre tenseur intermédiaire (8b) pour le raccordement d'une première section (6') en béton et d'une seconde section (6") en béton.

13. Centrale éolienne selon l'une des revendications 11 à 12 précédentes, **caractérisée en ce que** le tirant d'ancrage (9), en particulier un sabot d'appui (20) destiné à accueillir une barre de tension, est disposé de manière au moins partiellement dissociable, en particulier boulonné, à l'élément de crapaudine supérieure (8),
sachant que des moyens de fixation, en particulier des écrous (21), sont de préférence disposés dans l'élément de crapaudine supérieure (8) pour la fixation dissociable du tirant d'ancrage (9), en particulier, qu'ils sont enrobés à demeure dans l'élément de crapaudine supérieure (8).

14. Centrale éolienne selon l'une des revendications 11-13 précédentes, **caractérisée en ce que** des taquets (22) sont soudés sur la circonférence extérieure de l'élément de crapaudine supérieure (8), entre lesquels le tirant d'ancrage (9) est ou peut être disposé en liaison mécanique dans le sens de la circonférence, ou qu'un évidement (23) est formé sur la circonférence extérieure de l'élément de crapaudine supérieure (8), en particulier dans la paroi en acier (19), dans lequel le tirant d'ancrage (9) est ou peut être disposé en liaison mécanique dans le sens de la circonférence.

15. Centrale éolienne selon l'une des revendications 11-14 précédentes, **caractérisée en ce que** des ancres de fondation (3) sont disposés dans la fondation (2) pour la fixation de la grue à tour pivotante (4), sachant que la fondation (2) se présente de préférence sous une forme en escalier, avec une base (14) et une surface d'accueil supérieure (15) pour l'ouvrage de tour (6) et une première partie des ancres de fondation (3) est disposée dans la surface d'accueil supérieure (15) et l'autre partie des ancres de fondation (3) dans la base (14).

16. Centrale éolienne selon l'une des revendications 11-15 précédentes, **caractérisée en ce que** la ou les section(s) (6', 6") en acier ou segments d'acier (10) comporte(nt) un tirant d'ancrage (9) supplémentaire et/ou un élément d'amortissement.

17. Centrale éolienne selon l'une des revendications 11-16 précédentes, **caractérisée en ce que** l'ouvrage de tour (6) est dressé à partir d'éléments en béton préfabriqués (7) paraboliques, coniques ou cylindriques, sachant que la première section (6') se compose d'éléments en béton préfabriqués (7) paraboliques dans une zone de pied, coniques dans une zone centrale et cylindriques dans une zone de tête.

18. Centrale éolienne selon la revendication précédente, caractérisée en ce qu'un membre tenseur intermédiaire (8b) est disposé dans la première section (6'), et que la seconde section (6") de l'ouvrage de tour (6) est dressée à partir d'éléments en béton préfabriqués (7) cylindriques et coniques, de préférence à partir d'éléments en béton préfabriqués (7) cylindriques dans une zone de pied et coniques dans une zone de tête, et que l'élément de transition (8a) est disposé dans la seconde section.
